# EUROPÄISCHE PATENTSCHRIFT

(11) **EP 0 607 234 B1**
(45) Veröffentlichungstag und Bekanntmachung des Hinweises auf die Patenterteilung: **03.05.1995**
(21) Anmeldenummer: 92921059.9
(22) Anmeldetag: 08.10.1992
(51) Int. Cl.: A23J 1/16, A23J 1/12, A23J 1/14

(54) **VERFAHREN ZUR GEWINNUNG VON LEBENSMITTELFÄHIGEN PROTEINEN AUS EINER PROTEINHALTIGEN SUBSTANZ**
METHOD OF EXTRACTING PROTEINS UTILIZABLE IN FOODSTUFFS FROM A PROTEIN-CONTAINING SUBSTANCE
PROCEDE D'OBTENTION DE PROTEINES COMESTIBLES A PARTIR D'UNE SUBSTANCE PROTEINIQUE

(30) Priorität: 10.10.1991 DE 4133538
(43) Veröffentlichungstag der Anmeldung: 27.07.1994
(73) Patentinhaber: NEUMÜLLER, Waldemar, D-37077 Göttingen (DE)
(72) Erfinder: NEUMÜLLER, Waldemar, D-37077 Göttingen (DE)
(74) Vertreter: Rehberg, Elmar, Dipl.-Ing.
(86) Internationale Anmeldenummer: EP9202313
(87) Internationale Veröffentlichungsnummer: WO9306741

(56) Entgegenhaltungen:
- WO-A-91/12730
- BE-A- 571 734
- US-A- 4 624 805
- US-A- 4 919 952
- INDUSTRIES ALIMENTAIRES ET AGRICOLES 1977, Seiten 1197 - 1217 T. STARON : 'Une Méthode d'Obtention des Protéines Végétales pour l'Alimentation Humaine et Animale'
- J. AGRIC. FOOD CHEM., Bd. 28, Nr. 3, 1980, WASHINGTON, US Seiten 529 - 532 A.ESEN

## Beschreibung

Die Erfindung bezieht sich auf ein Verfahren zur Gewinnung von lebensmittelfähigen Proteinen aus einer proteinhaltigen Substanz, wobei eine Lösung durch Aufschluß der proteinhaltigen Substanz in einem alkalischen Lösungsmittel und unter Homogenisation erfolgt, wobei die durch die Homogenisation eingebrachte Wärmeenergie gleichzeitig wieder entzogen wird, wobei das alkalische Lösungsmittel einen pH-Wert größer als 11,5, insbesondere von ca. 12,5 aufweist und/oder der Aufschluß der proteinhaltigen Substanz unter Anwesenheit eines Detergenz, insbesondere von Natriumdodecylsulfat (SDS) erfolgt, gewonnen wird, wobei unlösliche Bestandteile der Substanz von der Lösung abgetrennt werden, wobei die Lösung nach Neutralisation entsalzt wird und wobei die in der Lösung enthaltenen Proteine aufkonzentriert und durch Trocknung isoliert werden.

Bei der Stärkegewinnung aus Kartoffeln, der Mehlgewinnung aus Getreide, der Tofuherstellung und der Ölgewinnung aus verschiedenen Pflanzen fallen proteinhaltige Substanzen als Nebenprodukte an, deren Verwertung bislang nicht oder nur mit unverhältnismäßig hohem Aufwand möglich ist. Bei der Stärkegewinnung aus Kartoffeln handelt es sich hierbei um denaturierte, durch Trocknung verhornte und nicht mehr dispergierbare Kartoffelproteinkonzentrate. Bei der Mehlgewinnung fällt Gluten an, der aufgrund seiner klebrigen Konsistenz nur in wenigen Bereichen genutzt werden kann. Nebenprodukte der Tofuherstellung und der Ölgewinnung sind proteinhaltige Schrote.

Ein Verfahren der eingangs beschriebenen Art ohne die Verwendung eines Detergenz ist aus der US-A-4 624 805 bekannt. Dabei soll der Aufschluß bei einer Temperatur von nicht mehr als 55 °C (130 °F) erfolgen. Die geringste in der US-A-4 624 805 genannte Temperatur beim Aufschluß der proteinhaltigen Substanz ist 37,8 °C (100 °F). Die Homogenisation der proteinhaltigen Substanz beim Aufschluß erfolgt mittels Ultraschall.

Ein der eingangs beschriebenen Art weitgehend entsprechendes Verfahren ist auch aus der WO-A-9 112 730 bekannt. Der Aufschluß der proteinhaltigen Substanz erfolgt hierbei unter gleichzeitiger Feinstvermahlung. Der Einsatz eines Detergenz ist nicht vorgesehen.

Ein Verfahren zur Gewinnung von lebensmittelfähigen Proteinen aus einer proteinhaltigen Substanz, wobei eine Lösung durch Aufschluß der proteinhaltigen Substanz in einem alkalischen Lösungsmittel gewonnen wird, wobei unlösliche Bestandteile der Substanz von der Lösung abgetrennt werden, wobei die Lösung nach Neutralisation entsalzt wird und wobei die in der Lösung enthaltenen Proteine aufkonzentriert und durch Trocknung isoliert werden, ist aus dem "Journal of Food Science" (1974, Band 39, Seiten 183 - 186) bekannt. Dieser Artikel "Utilization of cottonseed whey protein concentrates produced by ultrafiltration" befaßt sich jedoch nicht mit der Problematik der Hydrolyse der Proteine und der dabei entstehenden Lysinoalanine und anderer Hydrolyseprodukte, die die Lebensmittelfähigkeit der konzentrierten Produkte erheblich beeinträchtigen.

Ein Verfahren zum Gewinnen von lebensmittelfähigen Proteinen aus einer Proteinhaltigen Substanz, wobei die in einer Lösung enthaltenen Proteine aufkonzentriert und durch Trocknung isoliert werdend ist auch aus der DE-OS 28 14 922 bekannt. Dieses Verfahren dient zur Gewinnung von nativem Kartoffelprotein aus Kartoffelfruchtwasser. Das Kartoffelfruchtwasser fällt im Rahmen der Stärkegewinnung beim Zerkleinern der Kartoffeln an. Die in dem Fruchtwasser enthaltenen Kartoffelproteine werden durch Ansäuern und Erhitzen des Kartoffelfruchtwassers in Gegenwart von SO₂ ausgeflockt, d. h. koaguliert. Anschließend wird der nicht koagulierte Anteil des Fruchtwassers möglichst weitgehend abgefiltert und der so erhaltene Filterkuchen getrocknet. Alternativ wird die Sprühtrocknung der in einer teilweise eingeengten Kartoffelfruchtwasser-Losung enthaltenen Proteine beschrieben. Zur Entfernung des in dem so gewonnenen Kartoffelproteins in größerem Umfang enthaltenen Glycoalkaloids Solanin wird dessen saure Extraktion mit einem organischen Lösungsmittel, ausgewählt aus der Methanol, N-Butanol und Isopropanol umfassenden Gruppe, angeregt. Dieser Extraktion sollen die ausgeflockten Kartoffelproteine unterworfen werden. Nachteilig bei dem bekannten Verfahren ist die Notwendigkeit, es direkt in den Stärkegewinnungsprozeß zu integrieren. Das anfallende Kartoffelfruchtwasser muß ob seiner großen Oxidationsempfindlichkeit sofort weiterverarbeitet werden. Schon bei der direkten Weiterverarbeitung des Kartoffelfruchtwassers wird gemäß der DE-OS 25 00 200 der Zusatz von Antioxydationsmitteln empfohlen. Die direkte Bindung des bekannten Verfahrens an den Stärkegewinnungsprozeß führt unter anderem dazu, daß es nur während dar Kartoffelsaison durchgeführt werden kann. Für den Rest des Jahres stehen die entsprechenden Anlagen hingegen still. Das bekannte Verfahren hat sich auch aufgrund der zu seiner Durchführung notwendigen hohen Investitionskosten und des großen Verbrauchs an Chemikalien bei seiner Durchführung nicht durchsetzen können. Vielmehr wird das bei der Stärkegewinnung in dem Kartoffelfruchtwasser anfallende Kartoffelprotein ohne weitere Aufbearbeitung ausgefällt und getrocknet. Hierdurch entsteht das bekannte denaturierte, durch die Trocknung verhornte und nicht mehr dispergierbare Nebenprodukt.

Aus der DE-OS 28 14 922 ist ein Verfahren zur Aufbereitung von aus Kartoffelfruchtwasser ausgefällten Kartoffelproteinen bekannt. Hier werden vor dem Trocknen in den Kartoffelproteinen enthaltene Begleitstoffe, insbesondere Lipide, Geruchs- und Geschmacksstoffe, durch Extraktion mit einem polaren Lösungsmittel wie beispielsweise Wasser, Ethanol oder Methanol entfernt. Anschließend werden die Kartoffelproteine sprüh-, gleichstrom- oder trommelgetrocknet. Nachteil bei diesem Verfahren ist wiederum die Notwendigkeit, es direkt am Ort des Anfalls des Kartoffelfruchtwassers bzw. der Kartoffelproteine bei der Stärkegewinnung durchzuführen.

Bei der Tofuherstellung ist es bekannt, proteinhaltiges Sojaschrot in einer Wasserlösung mit einem pH-Wert von bis zu 9,0 auszukochen. Hierbei geht ein Teil der Proteine in Lösung, ein beachtlicher Rest verbleibt jedoch in dem Sojaschrot.

Aus "Die Nahrung" (1975, 19, 8, Seiten 687 - 688) ist ein Verfahren zur gleichzeitigen Gewinnung von Ölen und Proteinen aus pflanzlichen Rohstoffen bekannt, bei dem eine Feinstzerkleinerung der pflanzlichen Rohstoffe durch Ultraschallgeräte bzw. Hochfrequenzzerkleinerungsaggregate erfolgen soll. Die Feinstzerkleinerung der pflanzlichen Rohstoffe dient dabei aber ausschl., wie dem Wortlaut des Artikels "Trends bei der Verarbeitung von Ölsamen und -früchten. Die gleichzeitige Gewinnung von Ölen und Proteinen" zu entnehmen ist, dem Aspekt der Zellzerstörung. Auf diese Weise wird das Extrahieren der Öle und Proteine aus dem pflanzlichen Rohmaterialien erleichtert bzw. erst ermöglicht.

Der Erfindung liegt die Aufgabe zugrunde, ein Verfahren der eingangs beschriebenen Art derart weiterzubilden, daß verschiedene proteinhaltige Substanzen als Eingangsstoffe Verwendung finden können, insbesondere daß das bekannte Nebenprodukt der Stärkeproduktion aus Kartoffeln aufbereitet werden kann, ohne daß Hydrolyseschäden an dem Verfahrensprodukt auftreten.

Erfindungsgemäß wird dies dadurch erreicht, daß der Aufschluß der proteinhaltigen Substanz bei Zimmertemperatur und die Homogenisation mittels Hochdruckdesintegration erfolgt. Überraschenderweise stellt sich heraus, daß sich eine Vielzahl ansonsten nicht dispergierbarer, proteinhaltiger Substanzen in dem stark alkalischen Lösungsmittel bei Zimmertemperatur aufschließbar sind, wobei trotz des hohen pH-Werts von mehr als 11,5 keine nennenswerte Hydrolyseschäden auftreten. Vielmehr weisen die aufgeschlossenen Proteine auch bei einer koagulierten Ausgangssubstanz eine nativen Proteinen vergleichbare Struktur auf. Bei dem Aufschluß gehen vorwiegend die in der Substanz enthaltenen Proteine in Lösung, so daß unlösliche Bestandteile leicht abzutrennen sind. Dies kann beispielsweise durch Zentrifugieren oder eine geeignete Filtertechnik durchgeführt werden. Häufig mag auch eine weitergehende Aufbereitung, d. h. Reinigung der Lösung von Begleitstoffen sinnvoll sein. Das Neutralisieren und Entsalzen der alkalischen Lösung führt zu einem hochwertigen, geschmacksneutralen Endprodukt. Durch die Homogenisation der Mischung aus proteinhaltiger Substanz und dem alkalischen Lösungsmittel mittels Hochdruckdesintegration wird der Aufschluß der Proteine extrem beschleunigt. Dies garantiert die Möglichkeit zur großtechnischen Realisierung des neuen Verfahrens. Die durch die Homogenisation in die Mischung eingebrachte Energie ist der Mischung, beispielsweise unter Zuhilfenahme eines Wärmetauschers wieder zu entziehen. In jedem Fall muß ein Erwärmen der Mischung über Zimmertemperatur hinaus unterbunden werden, um der Hydrolyse der Proteine keinen Vorschub zu leisten. Hochdruckdesintegration ist beispielsweise aus der Milchhomogenisierung bekannt. Hier stehen bereits entsprechende Geräte zur Verfügung, die auch für das neue Verfahren verwendbar sind.

Das alkalische Lösungsmittel muß entweder einen pH-Wert größer als 11,5 aufweisen und/oder der Aufschluß muß in Gegenwart eines Detergens erfolgen. In Verbindung mit der Homogenisation des Gemisches aus Lösungsmittel und proteinhaltiger Substanz hat sich ein pH-Wert von ca. 12,5 als besonders vorteilhaft beim Aufschluß der Proteine herausgestellt. Als besonders gut geeignetes Detergens erweist sich Natriumdodecylsulfat (SDS). Es kann mit Hilfe von Kaliumsalzen leicht ausgefällt und auf diese Weise von den Proteinen entfernt werden. Im Prinzip sind auch andere Detergenzien, sofern sie vom Protein wieder abtrennbar sind, verwendbar. Der Einsatz der Detergenzien ermöglicht den Aufschluß beispielsweise von bei der Tofuherstellung und der Ölgewinnung aus Pflanzen anfallenden Schroten schon bei Zimmertemperatur und einem pH-Wert von weniger als 10. Die hierzu notwendige Menge SDS kann bis auf einen unschädlichen Rest problemlos mit Kaliumsalzen ausgefällt werden.

Das alkalische Lösungsmittel kann eine Alkohollösung sein. Alkohollösungen als alkalische Lösungsmittel sind zur kostengünstigen Durchführung des neuen Verfahrens besonders geeignet.

Die in der Lösung befindlichen Proteine können durch Ultrafiltration aufkonzentriert werden und die Lösung kann durch Diafiltration entsalzt werden. Die bekannte Ultrafiltration zum Aufkonzentrieren der Lösung gestattet eine erneute Verwendung des abgefilterten Lösungsmittels und verringert die Wärmeenergie, die bei der Trocknung der Proteine zugeführt werden muß. Die Diafiltration zum Entsalzen der Lösung ist insbesondere insofern vorteilhaft, als daß es sich um ein mechanisches Verfahren handelt, also kein erneuter Einsatz von Chemikalien erforderlich ist. Außerdem ist mit der Diafiltration eine weitergehende Aufbereitung, d. h. Reinigung der Lösung verbunden. Die Ausschlußgrenze bei der Diafiltration liegt vorteilhaft bei 10.000 Dalton.

Von der proteinhaltigen Substanz können vor deren Aufschließen organoleptische Verbindungen, insbesondere Glycoalkaloide und Lipide durch saure Extraktion und anschließende Heißfiltration abgetrennt werden. Dieser Verfahrensschritt ist insbesondere zur Entfernung des Solanins aus kartoffelproteinhaltigen Substanzen sinnvoll. Für den Umfang der notwendigerweise einzusetzenden Chemikalien stellt es sich als günstig heraus, die saure Extraktion an der mechanisch zerkleinerten, aber noch nicht aufgeschlossenen Substanz durchzuführen. Unter Aspekten der Lebensmitteleignung ist insbesondere die Verwendung einer Mischung aus Ethanol und Eisessig für die saure Extraktion sinnvoll. Prinzipiell konnten jedoch auch andere Alkohole eingesetzt werden.

Die proteinhaltige Substanz kann vor dem Aufschließen mit Hexan entfettet werden. Dieser zusätzliche Verfahrensschritt ist vorwiegend bei der Aufarbeitung von Gluten angezeigt. Eine Extraktionsbehandlung mit Alkoholen ist bei Gluten hingegen nicht angebracht, da Gluten alkohollösliche Proteine enthält.

Die proteinhaltige Substanz kann zu Beginn des Aufschlusses sauer aufgenommen werden. Das saure Aufnehmen der proteinhaltigen Substanz hat sich insbesondere bei der Aufarbeitung von Gluten als sinnvolle und den Aufschluß beschleunigende Maßnahme herausgestellt.

Der Aufschluß der proteinhaltigen Substanz kann unter Anwesenheit von Wasserstoffperoxyd erfolgen. Die Verwendung von Wasserstoffperoxyd am Aufschluß der proteinhaltigen Substanz ermöglicht die pH-Fällung der aufgeschlossenen Proteine, was ihr Aufkonzentrieren vor der Trocknung erleichtert. Weiterhin wirkt sich das Wasserstoffperoxid in einer helleren Färbung und einem langkettigeren Aufbau der gewonnenen lebensmittelfähigen Proteine aus.

Die Erfindung wird im folgenden anhand von Ausführungsbeispielen näher erläutert und beschrieben.

### Beispiel 1:

Bei der Stärkegewinnung aus Kartoffeln angefallene verunreinigte Kartoffelproteine mit einem Anteil von 80 bis 85 % Proteinen, 8 bis 10 % lipidartigen Verbindungen und 1 bis 2 % Mineralstoffen sowie bis zu 0,12 % Solanin werden durch Vermahlen mechanisch zerkleinert. Anschließend wird das verunreinigte Kartoffelprotein mit einer Mischung aus 98 Volumenprozent Ethanol und 2 Volumenprozent Eisessig versetzt. Die Einsatzmenge der Mischung aus Ethanol und Eisessig beträgt dabei 3 - 5 l je kg verunreinigtes Kartoffelprotein. Anschließend wird das verunreinigte Kartoffelprotein 20 Minuten unter Rückfluß und ständigem Umrühren in der Mischung aus Ethanol und Eisessig gekocht. Die Kochtemperatur beträgt ca. 80 °C. Nach dem Kochen wird der Sud heiß filtriert und der Rückstand erneut mit 3 - 5 l der Mischung aus Ethanol und Eisessig je kg aufgenommen und unter Rückfluß und Umrühren 20 Minuten gekocht. Je nach dem Eingangsgehalt und dem gewünschten Endgehalt des Glycoalkaloids Solanin kann dieser Vorgang noch mehrfach wiederholt werden. Sobald die Extraktion beendet ist, wird der Rückstand entweder direkt weiterverarbeitet oder zur Zwischenlagerung eingetrocknet.

Nun wird der das Kartoffelprotein enthaltene Rückstand in eine 50%ige Ethanollösung eingerührt, wobei ein Hochdruckdesintegrator im Bypass zu dem Mischungsbehälter betrieben wird. Hierbei entfallen auf jedes kg Rückstand bis zu 20 l Lösungsmittel. Dem Lösungsmittel ist 30%iges Wasserstoffperoxyd so zugegeben, daß dessen Konzentration einem zweifachen molaren Überschuß an Cystein entspricht. Nach Zugabe von bis zu 0,2 mol Alkali je kg Überstand wird kontinuierlich weiteres Wasserstoffperoxyd zugesetzt. Insgesamt werden zwischen 50 und 100 ml 30%iges Wasserstoffperoxyd je kg aufzuschließendem Überstand hinzugegeben. Während der gesamten Zeit wird homogenisiert. Der gesamte Aufschluß des kartoffelproteinhaltigen Rückstands nimmt etwa 30 Minuten in Anspruch.

Anschließend wird die im Aufschluß gewonnene Lösung bei ca. 4.500 xg zwei Minuten zentrifugiert um unlösliche Bestandteile des verunreinigten Kartoffelproteins abzutrennen. Das Aufkonzentrieren der Lösung erfolgt mittels Ultrafiltration, wobei eine Membran mit einer Ausschlußgrenze kleiner als 10.000 Dalton Verwendung findet. Bei der Aufkonzentration der Lösung werden ca. 70 % des Ausgangsvolumens entfernt.

Nach Neutralisation der aufkonzentrierten Lösung wird diese durch Diafiltration entsalzt und gereinigt. Im letzten Verfahrensschritt wird das Kartoffelprotein durch Sprühtrocknung der verbleibenden Lösung gewonnen. Für das getrocknete Kartoffelprotein ergibt sich eine Zusammensetzung aus 89 bis 93 % Protein (N x 6,25), 3 bis 5 % Asche, ca. 0,4 % Fett und weniger als 0,01 % Solanin. Dieser Solaningehalt liegt unter demjenigen einer geschälten Kartoffel von 0,012 % der Trockensubstanz. Der Trockensubstanzanteil der sprühgetrockneten Kartoffelproteine beträgt 92 bis 95 %.

### Beispiel 2:

Schrote der Ölgewinnung wie z. B. aus den Pflanzen Soja und Raps werden nach mechanischer Zerkleinerung direkt in verdünnter Natronlauge aufgeschlossen. Hierbei beträgt der pH-Wert der Natronlauge 12,5, sofern die Mischung aus den zerkleinerten Schoten und der Natronlauge während des Aufschlusses homogenisiert wird. Erfolgt ausschließlich ein Umrühren der Mischung, sollte eine 0,1 normale Natronlauge mit einem pH-Wert von 13 Anwendung finden. In diesem Fall nimmt der Aufschluß dennoch mehrere Stunden in Anspruch. Bei Homogenisation der Mischung sind nur einige Minuten erforderlich.

Die im Aufschluß gewonnene Lösung wird analog zu Beispiel 1 weiterbehandelt, um die Proteine in lebensmittelfähiger Form zu isolieren.

### Beispiel 3:

Der Aufschluß der bei der Ölgewinnung aus Pflanzen anfallenden proteinhaltigen Schrote oder anderer schwer aufschließbarer proteinhaltiger Substanzen erfolgt alternativ zu Beispiel 3 unter Anwesenheit von Natriumdodecylsulfat (SDS). 0,1 normaler Natronlauge als Lösungsmittel werden 1 % SDS hinzugegeben. Nach 30 Minuten wird mit 4.500 xg zentrifugiert und der Überstand abdekantiert. Dem Überstand wird soviel Kaliumsalz zugesetzt, daß die Kaliumkonzentration dem 3fachen molaren Überschuß, bezogen auf das eingesetzte Natriumdodecylsulfat (SDS) entspricht. Nach 15 Minuten Rühren tritt ein Niederschlag auf, der mit 4.500 xg abzentrifugiert wird. Auf diese Weise lassen sich 95 bis 98 % des eingesetzten SDS entfernen. Die verbleibende SDS-Konzentration liegt unterhalb der kritischen Mizellkonzentration (CMC). Der nach dem Entfernen des SDS verbleibende Überstand wird mittels Ultrafiltration unter Verwendung von Membranen mit einer Ausschlußgrenze kleiner als 10.000 Dalton aufkonzentriert, neutralisiert und mittels Diafiltration entsalzt. Die Diafiltration entfernt hierbei auch die nach der Fällung mit Kaliumsalz in der Lösung verbliebenen SDS Reste.

## Patentansprüche

1. Verfahren zur Gewinnung von lebensmittelfähigen Proteinen aus einer proteinhaltigen Substanz, wobei eine Lösung durch Aufschluß der proteinhaltigen Substanz in einem alkalischen Lösungsmittel und unter Homogenisation, wobei die durch die Homogenisation eingebrachte Wärmeenergie gleichzeitig wieder entzogen wird, wobei das alkalische Lösungsmittel einen pH-Wert größer als 11,5, insbesondere von 12,5 aufweist und/oder der Aufschluß der proteinhaltigen Substanz unter Anwesenheit eines Detergens, insbesondere von Natriumdodecylsulfat (SDS), erfolgt, gewonnen wird, wobei unlösliche Bestandteile der Substanz von der Lösung abgetrennt werden, wobei die Lösung nach Neutralisation entsalzt wird und wobei die in der Lösung enthaltenen Proteine aufkonzentriert und durch Trocknung isoliert werden, dadurch gekennzeichnet, daß der Aufschluß der proteinhaltigen Substanz bei Zimmertemperatur und die Homogenisation mittels Hochdruckdesintegration erfolgt.

2. Verfahren nach Anspruch 1, dadurch gekennzeichnet, daß das Natriumdodecylsulfat (SDS) nach dem Aufschluß mit Kaliumsalzen ausgefällt wird.

3. Verfahren nach Anspruch 2, dadurch gekennzeichnet, daß das alkalische Lösungsmittel eine Alkohollösung ist.

4. Verfahren nach einem der Ansprüche 1 bis 3, dadurch gekennzeichnet, daß die in der Lösung befindlichen Proteine durch Ultrafiltration aufkonzentriert werden und daß die Lösung durch Diafiltration entsalzt wird.

5. Verfahren nach einem der Ansprüche 1 bis 4, dadurch gekennzeichnet, daß von der proteinhaltigen Substanz vor deren Aufschließen organoleptische Verbindungen, insbesondere Glycoalkaloide und Lipide, durch saure Extraktion, insbesondere mit Ethanol und Eisessig, und arschließende Heißfiltration abgetrennt werden.

6. Verfahren nach einem der Ansprüche 1 bis 5, dadurch gekennzeichnet, daß die proteinhaltige Substanz vor deren Aufschließen durch Extraktion mit Hexan entfettet wird.

7. Verfahren nach Anspruch 1, dadurch gekennzeichnet, daß die proteinhaltige Substanz zu Beginn des Aufschlusses sauer aufgenommen wird.

8. Verfahren nach Anspruch 1, dadurch gekennzeichnet, daß der Aufschluß der proteinhaltigen Substanz unter Anwesenheit von Wasserstoffperoxyd erfolgt.

## Claims

1. A method of extracting proteins suitable for foodstuff from a protein-containing substance, in which a solution is obtained by breaking-down the protein-containing substance in an alkaline solvent while homogenizing, in which the thermal energy introduced by homogenizing is simultaneously extracted, in which the alkaline solvent has a pH value above 11.5, particularly of approximately 12.5, and/or the breaking-down of the protein-containing is performed in the presence of a detergent, particularly of sodium dodecylsulfate (SDS); in which the unsoluble components of the substance are separated from the solution; in which the solution is desalinated after neutralization; and in which the proteins contained in the solution are concentrated, and isolated by drying, characterized in that the step of breaking down the protein-containing substance is performed at room temperature and that the homogenizing is performed by means of high pressure disintegration.

2. A method according to claim 1, characterized in that the sodium dodecylsulfate (SDS) is precipitated with potassium salts after the step of breaking-down.

3. A method according to claim 2, characterized in that the alkaline solvent is an alcohol solution.

4. A method according to one of the claims 1 to 3, characterized in that the proteins contained in the solution are concentratedby means of ultrafiltration and that the solution is desalinated by means of diafiltration.

5. A method according to one of the claims 1 to 4, characterized in that organoleptic compounds, particularly glycoalkaloids and lipids, are separated from the protein-containing substance by acidic extraction, particularly with ethanol and glacial acetic acid, and subsequent hot-filtration before the step of breaking-down.

6. A method according to one of the claims 1 to 5, characterized in that the protein-containing substance is defattened by means of extraction with hexane before the step of breaking-down.

7. A method according to claim 1, characterized in that the protein-containing substance is acidified at the beginning of the step of breaking-down.

8. A method according to claim 1, characterized in that the step of breaking-down the protein-containing substance is performed in the presence of hydrogen peroxide.

## Revendications

1. Procédé de préparation de protéines alimentaires à partir d'une substance protéinique, dans lequel une solution est préparée par dissolution de la substance protéinique dans un solvant alcalin et par homogénéisation, l'énergie thermique apportée par l'homogénéisation étant à nouveau simultanément prélevée, le solvant alcalin présentant un pH supérieur à 11,5, en particulier de 12,5 et/ou la dissolution de la substance protéinique s'effectuant en présence d'un détergent, en particulier de sulfate dodécylique de sodium (SDS), dans lequel des composants insolubles de la substance sont séparés de la solution, dans lequel la solution est dessalée après neutralisation et dans lequel les protéines contenues dans la solution sont concentrées et isolées par séchage, caractérisé en ce que la dissolution de la substance protéinique s'effectue à la température de la pièce et l'homogénéisation par désintégration sous haute pression.

2. Procédé selon la revendication 1, caractérisé en ce que le sulfate dodécylique de sodium (SDS) est précipité après dissolution avec des sels de potassium.

3. Procédé selon la revendication 2, caractérisé en ce que le solvant alcalin est une solution d'alcool.

4. Procédé selon l'une des revendications 1 à 3, caractérisé en ce que les protéines se trouvant dans la solution sont concentrées par ultrafiltration et en ce que la solution est dessalée par diafiltration.

5. Procédé selon l'une des revendications 1 à 4, caractérisé en ce qu'avant la dissolution de la substance protéinique, des composés organoleptiques, en particulier des glycoalcaloïdes et des lipides, sont séparés de celle-ci, par extraction acide, en particulier avec de l'éthanol et de l'acide acétique, suivie d'une filtration à chaud.

6. Procédé selon l'une des revendications 1 à 5, caractérisé en ce que la substance protéinique est dégraissée avant dissolution, par extraction avec de l'hexane.

7. Procédé selon la revendication 1, caractérisé en ce que la substance protéinique est absorbée de manière acide au début de la dissolution.

8. Procédé selon la revendication 1, caractérisé en ce que la dissolution de la substance protéinique s'effectue en présence d'eau oxygénée.
